# EUROPÄISCHE PATENTSCHRIFT

(11) **EP 3 201 503 B1**
(45) Veröffentlichungstag und Bekanntmachung des Hinweises auf die Patenterteilung: **02.05.2018**
(21) Anmeldenummer: 15767503.4
(22) Anmeldetag: 24.09.2015
(51) Int. Cl.: F16K 31/50, F16K 37/00

(54) **REGELVENTIL**
CONTROL VALVE
SOUPAPE DE REGULATION

(30) Priorität: 29.09.2014 DE 202014104637 U
(43) Veröffentlichungstag der Anmeldung: 09.08.2017
(73) Patentinhaber: Regeltechnik Kornwestheim GmbH, 70806 Kornwestheim (DE)
(72) Erfinder: SEEL, Alexander, 74182 Obersulm (DE); TOBERER, Horst, 75038 Oberderdingen (DE); WASSMER, Boris, 70825 Korntal-Münchingen (DE)
(74) Vertreter: Fleck, Hermann-Josef
(86) Internationale Anmeldenummer: PCT/EP2015/072014
(87) Internationale Veröffentlichungsnummer: WO 2016/050609

(56) Entgegenhaltungen:
- WO-A1-2010/068965
- DE-B1- 1 550 145
- FR-A- 921 712
- JP-A- H04 165 172
- US-A- 3 647 038
- US-A1- 2013 314 239
- US-B1- 6 471 182

## Beschreibung

Die Erfindung bezieht sich auf ein Regelventil mit einem Ventilgehäuse, durch das ein Strömungskanal verläuft, dessen Strömungsquerschnitt mittels einer Verschlusseinheit aus Ventilsitz und einem relativ zu diesem verstellbaren Ventilkegel über einen vorgegebenen Stellhub änderbar ist, und mit einer Stelleinrichtung, welche eine Schubeinheit mit einer den Ventilkegel über einen Verstellweg verstellenden Schubstange und eine auf diese einwirkende und mittels einer Regeleinrichtung geregelte Antriebseinrichtung aufweist, wobei die Regeleinrichtung eine den Verstellweg über eine Übertragungseinheit erfassende Messeinheit aufweist.

Derartige Regelventile kommen zur Regelung von Fluidströmen beispielsweise in der Prozess- oder Lebensmittelindustrie zum Einsatz, z.B. auch als Dampfventil. Dabei erlaubt der über den Ventilkegel änderbare Strömungsquerschnitt eine genaue Regelung des entsprechenden Massen- bzw. Volumenstroms. Um die genaue Regelung zu gewährleisten, weisen bekannte Regelventile der eingangs genannten Art Übertragungseinheiten zur Übertragung des zurückgelegten Verstellweges an eine Regeleinheit auf.

So ist in der DE 44 47 309 C2 ein Regelventil angegeben, welches eine Übertragungseinheit mit einem Signalgeber zur Übertragung des zurückgelegten Weges der Schubstange bzw. des Ventilkegels an eine Regeleinrichtung aufweist. Der Signalgeber ist über einen Ausleger an die Schubstange gekoppelt, so dass deren Stellhub über ein entsprechendes Signal an die Regeleinrichtung übertragen wird.

Die DE 198 50 188 A1 bezieht sich auf einen Adapter, mit welchem ein Ventil und eine Betätigungseinrichtung zu dem Zweck miteinander gekoppelt werden, die Wärmeübertragung zwischen dem Ventil und der Betätigungseinrichtung zu begrenzen.

In der DE 299 23 552 U1 ist ein 3-Wege-Ventil angegeben, bei welchem zwei über eine Ventilspindel bewegte Drosselorgane bei Bewegung der Spindel gegensinnige Öffnungsgrade bewirken. In der DE 10 2006 020 184 A1 ist ein weiteres Regelventil offenbart. Hierbei sind zwei über einen gemeinsamen Betätigungsmechanismus verstellbare Durchflussregulierorgane vorhanden sowie eine auf diese wirkende Regeleinrichtung und eine Zusatzreguliereinrichtung.

US2013/0314239 A1 offenbart ein Regelventil nach dem Oberbegriff des Anspruchs 1.

Regelventile mit unterschiedlichem Stellhub, wie sie für unterschiedliche Einsatzzwecke verwendet werden, sind auch mit unterschiedlichen Messeinheiten und Aufnahmen für dieselben ausgestattet, womit ein erheblicher Aufwand bei der Herstellung der unterschiedlichen Teile und bei der Montage verbunden ist, die eine hohe Präzision erfordert.

Der Erfindung liegt daher die Aufgabe zugrunde, ein Regelventil bereitzustellen, welches für die Produktion von Ventilen für unterschiedliche Einsatzzwecke einen geringeren Teile- und Fertigungsaufwand erfordert.

Die Aufgabe der Erfindung wird mit den Merkmalen des Anspruchs 1 gelöst. Hierbei ist vorgesehen, dass die Übertragungseinheit zwischen der Schubeinheit und der Messeinheit mit einer eine austauschbare Baueinheit aufweisenden Adaptereinheit versehen ist, welche den Stellhub entsprechend einem von ihr vorgegebenen Übersetzungsverhältnis in einen durch die Messeinheit vorgegebenen Messhub übersetzt. Somit kann vorteilhaft eine einheitliche Messeinheit für Regelventile mit unterschiedlichen Stellhüben verwendet werden. Dies erlaubt z.B. zugleich die Verwendung einer einheitlichen Ventilhaube zur Abdeckung der Messeinheit. Bei Ventilen mit unterschiedlichen Stellhüben ist lediglich die austauschbare Baueinheit anzupassen, sodass wesentlich weniger unterschiedliche Bauteile verwendet werden als bei herkömmlichen unterschiedlichen Regelventilen. Falls zweckmäßig können weitere, der Stabilisierung dienende Komponenten ersetzt werden, wie etwa die Unterschale des die Messeinheit umgebenden Gehäuses, was etwa bei Ventilen mit großen Stellhüben von Vorteil sein kann. Gemäß der Erfindung ist es vorgesehen, dass die Messeinheit ein verschieblich gelagertes Hubelement aufweist und dass die Baueinheit ein Übersetzungsglied umfasst, welches an das Hubelement angekoppelt ist. Auf diese Weise kann eine einfache Kopplung der die austauschbare Baueinheit aufweisenden Adaptereinheit an die Messeinheit erreicht werden.

Dabei kann die Kopplung dadurch optimiert werden, dass die Baueinheit ein Hubglied umfasst, über welches das Übersetzungsglied an dem Hubelement angekoppelt ist.

Eine besonders einfach auszulegende, einzubauende und haltbare erfindungsgemäße Variante besteht darin, dass das Übersetzungsglied eine axial unverschieblich drehbar gelagerte Adapterwelle ist, die über ein auf dieser beim Drehen axial bewegtes Hubglied an das Hubelement angekoppelt ist und dass das Hubglied eine Hubmutter ist. Das Gewinde der Hubmutter ist dabei an das Gewinde der Adapterwelle angepasst.

Eine sichere Ankopplung wird dadurch erreicht, dass das Hubglied an dem Hubelement kraftschlüssig festgelegt ist. Hierzu können Befestigungsmittel, insbesondere Schrauben dienen, sodass die kraftschlüssige Verbindung wieder lösbar und die Austauschbarkeit des Hubglieds gewährleistet ist. Auch eine formschlüssige Kopplung, die die Übertragung einer Stellkraft von dem Hubglied auf das Hubelement zulässt, ist möglich.

Vorzugsweise ist das Hubelement als verschieblich gelagerter Messschlitten ausgebildet. Dieser kann einfach und sicher beispielsweise an Rahmen, Stützen oder dgl. oder an Wänden des Gehäuses in dessen Innenraum verschieblich unter präziser Führung gelagert werden, wozu z. B. parallele Schienen, Nuten, Stangen oder ähnliche Führungen dienen können.

Für den Aufbau und die Funktion von Vorteil ist es, wenn die Adaptereinheit zum Ankoppeln an der Schubeinheit ein Koppelelement und zur Verbindung mit einem Gehäuse des Regelventils eine Lagereinheit aufweist und wenn die Schubeinheit mit einem zu dem Koppelelement komplementären Koppelanschluss versehen ist.

Hierbei kann erfindungsgemäß vorgesehen sein, dass das Koppelelement Teil der austauschbaren Baueinheit ist und dass die Lagereinheit mit der Baueinheit austauschbar oder dauerhaft mit dem Ventilgehäuse verbunden ist. Die austauschbaren Elemente (Koppelelement und/oder Lagereinheit) lassen sich einfach bei Bedarf ersetzten, beispielsweise wenn ein Ventil umgerüstet werden soll. Die Adaptereinheit kann jedoch auch derart ausgestaltet sein, dass das Koppelelement und/oder die Lagereinheit einheitlich verwendbar ist und daher nicht zu der austauschbaren Baueinheit gehört.

Eine gute Funktionalität des erfindungsgemäßen Regelventils wird dadurch erhalten, dass das Hubelement einen zu dem Verstellweg entsprechend dem Übersetzungsverhältnis proportionalen Messweg zurücklegt, dass das Hubelement den Messweg mittels mindestens einer an dem Hubelement angeordneten Übertragungsleiste auf ein Übertragungselement überträgt, welches in Wirkverbindung mit einem Positionssignale liefernden Signalgeber steht und dass die Messeinheit zum Bestimmen des Stellhubs aus Positionssignalen des Signalgebers ausgebildet ist. Das Übertragungselement ist dabei beispielsweise als Zahnrad ausgebildet, welches auf einfache Weise die axiale Bewegung der Übertragungsleiste gemäß des Messhubes in eine Rotationsbewegung umsetzt. Dies ist insbesondere vorteilhaft, wenn als Signalgeber ein Drehpotentiometer vorgesehen ist, da dann die Drehbewegung einfach durch beispielsweise eine gemeinsame Rotationsachse auf den Signalgeber übertragbar ist. Über den Signalgeber wird die mechanisch übertragene Information des zurückgelegten Streckenanteils in ein elektrisches Signal, das Positionssignal, umgewandelt. Aus diesem ist beispielsweise über eine Signalverarbeitungseinheit, welcher unter anderem die Information des Übersetzungsverhältnisses vorliegt, der Stellweg ermittelbar.

Erfindungsgemäß ist es vorteilhaft vorgesehen, dass der Stellhub zwischen 1 und 100 mm beträgt und dass der Messhub zwischen 1 und 80 mm beträgt, wobei der Messhub kleiner oder gleich dem Stellhub ist. Der Verstellweg bzw. der Messweg stellt dabei jeweils einen bestimmten Anteil am Stell- bzw. Messhub dar, welcher den Abstand zwischen 0 und 100 % des Weges, also den jeweils maximal möglichen verstellbaren Weg beschreibt. Der Stellhub kann durch einen in der Regeleinrichtung hinterlegten Regelhub vorgegeben sein und muss nicht einem durch die mechanische Konstruktion festgelegten Maximalhub entsprechen.

Dadurch, dass das Übersetzungsglied mit seinem dem Ventilsitz zugewandten Ende in die ortsfest mit dem Gehäuse verbundene Lagereinheit ragt und in Messhubrichtung unbeweglich in der Lagereinheit festgelegt ist, wird eine präzise Übertragung des zurückgelegten Stellweges erreicht. So wird beispielsweise eine axiale Bewegung Spindelmutter, die nicht Teil des Verstellwegs ist, nicht auf das Übersetzungsglied übertragen. Eine solche Bewegung der Spindelmutter kann beispielsweise beim Auftreffen des Ventilkegels auf den Ventilsitz (vollständiges Schließen des Ventils) und der Abfederung des Anschlags durch eine Federung entstehen. Eine Verfälschung in der Übertragung über den Messweg wird verhindert. Eine lediglich axiale Bewegung der Spindelmutter bei der Federung überträgt sich nicht, da die Kopplung zwischen der Spindelmutter und dem Übersetzungsglied eine axiale Relativbewegung zwischen beiden zulässt.

Wenn das Übersetzungsglied in der Lagereinheit um die Messhubachse rotierbar gelagert ist, erlaubt dies eine einfache relative Übertragung des Stellweges auf die Messeinrichtung. Besonders vorteilhaft, da leichtgängig, kann hierbei ein Kugellager vorgesehen sein, aber auch andere Lagerungen, die eine Rotationsbewegung zulassen, sind möglich.

Eine vorteilhafte Ausgestaltung der Schubeinheit wird dadurch erreicht, dass die Schubeinheit eine Spindelmutter aufweist, welche sich längs konzentrisch zur Stellhubachse erstreckt und je nach Antriebsrichtung um die Stellhubachse in Rotation versetzbar ist und dass die Schubstange eine in der Spindelmutter geführte Gewindestange ist, wobei sie derart gelagert ist, dass sie bei Rotation der Spindelmutter in Stellhubrichtung verstellt wird.

Wenn die Spindelmutter mit ihrem dem Ventilsitz abgewandten Ende auf der gegenüberliegenden Seite des Übersetzungsglieds in die Lagereinheit ragt, wenn das Koppelelement zwischen Spindelmutter und Übersetzungsglied in der Lagereinheit angeordnet ist und wenn die Kopplung in der Weise ausgebildet ist, dass die Rotation der Spindelmutter über das Koppelelement auf das Übersetzungsglied übertragen wird, lässt sich eine einfache Übertragung der Bewegung der Schubeinheit auf das Übertragungselement realisieren.

Vorteilhaft ist erfindungsgemäß vorgestehen, dass die Rotation des Übersetzungsglieds das Hubelement mittels dem an dem Hubelement kraftschlüssig festgelegten Hubglied in Messhubrichtung verstellt.

Dadurch, dass die Spindelmutter auf ihrer dem Ventilsitz zugewandten Seite durch ein Federlager federnd bezüglich des Ventilsitzes abgestützt ist und/oder dass die Spindelmutter in der Lagereinheit federnd abgestützt ist, werden harte Anschläge beim Anfahren der Anfangs- und/oder Endposition abgefangen. Auf diese Weise wird Beschädigungen solcher Art am Regelventil vorgebeugt. Dabei gewährleistet eine Federung beim Aufsetzen des Ventilkegels auf den Ventilsitz ein sicheres Verschließen.

Hierbei ist vorteilhaft vorgesehen, dass in vollständig eingefahrenem Zustand der Schubstange die Spindelmutter in den Federweg der Spindelmutter oder in der Lagereinheit fahrbar ist. Daneben kann vorteilhaft vorgesehen sein, dass in vollständig eingefahrenem Zustand der Schubstange die Spindelmutter in den Federweg in der Lagereinheit fahrbar ist.

Eine vorteilhafte Ausgestaltung besteht hierbei darin, dass das Federlager Tellerfedern zur federnden Abstützung der Spindelmutter aufweist.

Die Erfindung wird nachfolgend anhand von Ausführungsbeispielen unter Bezugnahme auf die Zeichnungen näher erläutert. Es zeigen:
- Fig. 1: ein erfindungsgemäßes Regelventil mit Ventilgehäuse und Gehäuse mit aufgenommener Messeinrichung,
- Fig. 2: eine perspektivische Explosionsdarstellung von Schubeinheit, Adaptereinheit und Messeinheit des Regelventils gemäß Fig. 1,
- Fig. 3: eine perspektivische Darstellung der zusammengesetzten Einheiten gemäß Fig. 2,
- Fig. 4: eine perspektivische Darstellung von Schubeinheit, Adaptereinheit und einem Messschlitten,
- Fig. 5: eine perspektivische Explosionsdarstellung von Schubeinheit, Adaptereinheit und Messschlitten mit sichtbarer Hubmutter,
- Fig. 6a,: b eine Adapterwelle und eine Lagereinheit einer erfindungsgemäßen Adaptereinheit in Ansicht von hinten (a) und im seitlichen Schnitt (b) und
- Fig. 7a,: b eine Schubeinheit in Ansicht von der Seite (a) und im Schnitt (b).

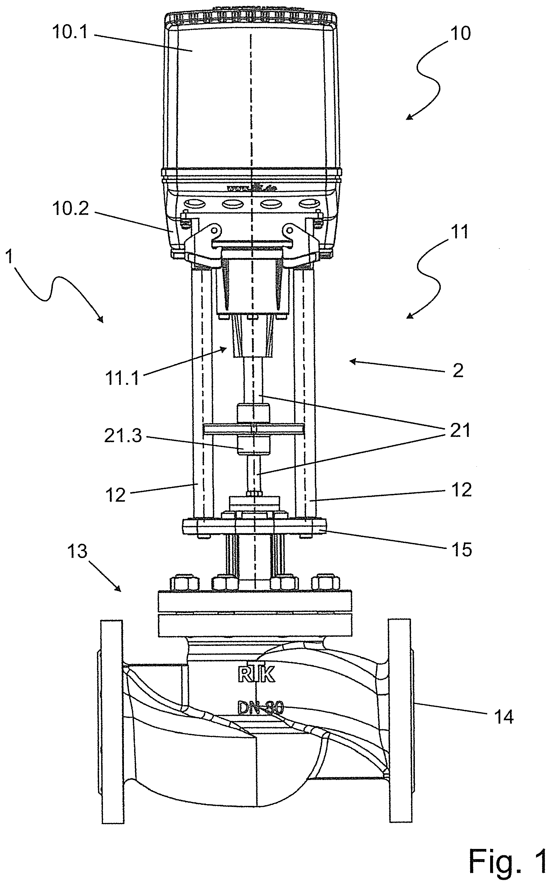

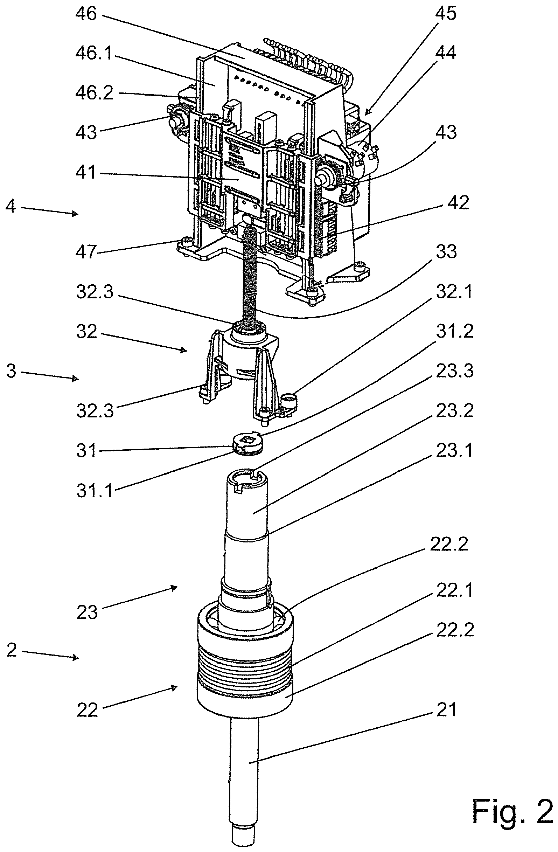

Fig. 1 zeigt ein Regelventil 1 mit einem Ventilgehäuse 13, welches einen Strömungskanal 14 aufweist. Das Ventilgehäuse 13 trägt in seinem Inneren einen Ventilsitz, auf dem ein Ventilkegel mittels einer Schubeinheit 2 in Anlage gebracht werden kann, um den Strömungskanal 14 zu verschließen. Auf der Oberseite weist das Ventilgehäuse 13 einen Anschlussflansch auf, auf dem ein Aufsatzteil mit seiner Flanschplatte aufgesetzt und mittels Befestigungsschrauben befestigt ist. Das Aufsatzteil trägt eine Brücke 15, die mit zwei Durchbrüchen versehen ist. In die Durchbrüche sind parallel zueinander ausgerichtete Längsführungen 12 eingesetzt, die sich vertikal nach oben erstrecken. An der dem Aufsatzteil abgekehrten Seite der Längsführungen 12 ist ein Gehäuse 10 mit einer Unterschale 10.2 und einer Haube 10.1 angeordnet, das unter anderem eine Messeinheit 4 aufnimmt (s. Fig. 2). Unterhalb des Gehäuses 10 zwischen den beiden Längsführungen 12 befindet sich eine Stelleinrichtung 11, welche sich in Richtung des Ventilgehäuses 13 erstreckt. Als Teil der Stelleinrichtung 11 sind an der Unterseite der Unterschale 10.2 Teile einer Antriebseinrichtung 11.1 ersichtlich. Ferner weist die Stelleinrichtung 11 die Schubeinheit 2 mit einer Schubstange 21 auf, die unterhalb der Antriebseinrichtung 11.1 erkennbar ist. Die Schubstange 21 ist zwischen einer Spindelmutter 23 der Schubeinheit 2 (s. Fig. 2) und dem Ventilgehäuse 13 koaxial zu der Spindelmutter 23 verlaufend angeordnet ist. Zwischen der Schubstange 21 und der Spindelmutter 23 befindet sich ein Federlager 22 (s. Fig. 2).

Fig. 2 zeigt einige Komponenten des Regelventils 1 gemäß Fig. 1 in einer Explosionsdarstellung. Die dargestellten Komponenten umfassen die Messeinheit 4, die sich bei dem vollständigen Regelventil 1 innerhalb des Gehäuses 10 befindet, eine unterhalb der Messeinheit 4 angeordnete Adaptereinheit 3 und die wiederum unterhalb der Adaptereinheit 3 dargestellte Schubeinheit 2.

Die Schubeinheit 2 weist auf ihrer in Richtung des Ventilgehäuses 13 (in Fig. 2 nicht dargestellt) gerichteten Seite die Schubstange 21 auf. Die Schubstange 21 ist zumindest zum Teil als Gewindestange ausgeführt und an ihrem in Richtung Ventilgehäuse 13 gerichteten Ende zur Verbindung mit dem Ventilkegel (nicht dargestellt) verjüngt. Mit dem der Verjüngung gegenüberliegenden, oberen Ende ragt die Schubstange 21 durch das Federlager 22 mit ihrem Außengewinde in ein Innengewinde der Spindelmutter 23, die mit dem Federlager 22 über zwei Kugellager 22.2 drehbar verbunden ist. Möglich wäre anstelle der Kugellager 22.2 auch ein anderes Radiallager. Das Federlager 22 weist zwischen den Kugellagern 22.2 ein Tellerfederpaket 22.1 zur Abfederung der Spindelmutter 23 auf, wenn die Schubstange 21 gegen einen Anschlag fährt, insbesondere mit dem Ventilkegel in den Ventilsitz. Anstelle des Tellerfederpakets 22.1 ist auch eine andere Federeinrichtung, beispielsweise eine Schraubenfeder einsetzbar. Das Tellerfederpaket bietet jedoch den Vorteil, dass es auf kompaktem Raum große Kräfte aufnehmen kann.

Die von dem Federlager 22 in Richtung der Messeinheit 4 weisende Spindelmutter 23 ist über einen Antrieb und ein Getriebe in Rotation versetzbar (Antrieb und Getriebe sind nicht dargestellt). Sie weist unterschiedliche Außendurchmesser auf. Über einen Absatz 23.1 geht die Spindelmutter in einen an ihrem der Adaptereinheit 3 zugewandten, oberen Ende angeordneten Einsatzabschnitt 23.2 über, welcher gegenüber dem unterhalb des Absatzes 23.1 angeordneten Abschnitt in seinem Außendurchmesser verringert ist. Mit dem Einsatzabschnitt 23.2 ist die Spindelmutter 23 an die Adaptereinheit 3 gekoppelt. Hierfür weist die Spindelmutter 23 an ihrem oberen Ende stirnseitig zwei Aussparungen 23.3 auf.

Oberhalb der Schubeinheit 2 ist erfindungsgemäß eine Adaptereinheit 3 angeordnet. Diese dient als eine Übertragungseinheit, um den Stellweg der Schubstange 21, und damit des Ventilkegels, an die Messeinheit 3 zu übertragen. In dem gezeigten Ausführungsbeispiel ist die gesamte Übertragungseinheit der Adaptereinheit 3 zugeordnet. In einer anderen Ausführung könnten aber auch Elemente der Übertragungseinheit vorhanden sein, welche nicht der Adaptereinheit 3 zugeordnet sind.

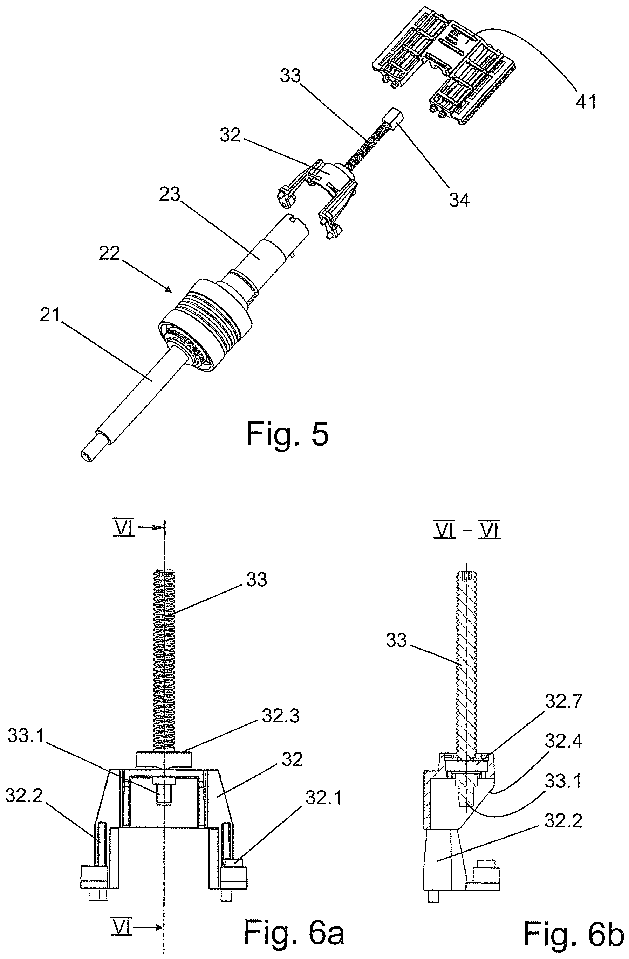

Die Adaptereinheit 3 umfasst ein als verdickte Scheibe ausgeführtes Koppelelement 31, welches zwischen der Spindelmutter 23 und einer Adapterwelle 33 der Adaptereinheit 3 angeordnet ist und die Drehbewegung der Spindelmutter 23 auf die Adapterwelle 33 überträgt. Zu diesem Zweck weist das Koppelelement 31 an seinem Außenumfang zwei Vorsprünge 31.1 und mittig einen vierkantigen Durchbruch 31.2 auf. Die Vorsprünge 31.1 sind derart ausgebildet, dass sie in die Aussparungen 23.3 der Spindelmutter 23 form- und kraftschlüssig eingreifen. In den Durchbruch 31.2 ragt das untere Ende der Adapterwelle 33 mit einem vierkantig ausgeführten Koppelende 33.1 (ersichtlich in Fig. 6a) formschlüssig hinein. Auch andere mehrkantige, zu einander korrespondierende Ausführungen des Durchbruches 31.2 und des Koppelendes 33.1 sind möglich. Die drehfeste Kopplung zwischen der Spindelmutter 23 und der Adapterwelle 33 über das Koppelelement 31 ist in einer Lagereinheit 32 der Adaptereinheit 3 realisiert. Die Lagereinheit 32 ist über zwei nach unten weisenden Stützen 32.2 und daran angeordneten Befestigungsstellen über Befestigungsmittel, welche hier Inbusschrauben 32.1 sind, an dem Gehäuse 10 des Regelventils 1 unverschieblich festlegbar. Aufgrund ihrer Ausgestaltung ist die Lagereinheit 32 mittels eines Formwerkzeuges einfach herzustellen. In die Lagereinheit 32 ist die Adapterwelle 33 durch eine Aufnahme 32.3 von oben eingeführt und in der Lagereinheit 32 vertikal festgelegt, aber drehbar gelagert. Die vertikale Festlegung erlaubt eine genaue Übertragung des Stellweges über den Messweg auf die Messeinheit 4. Ferner umfasst die Adaptereinheit 3 eine zu dem Gewinde der Adapterwelle 33 passende Hubmutter 34 (in Fig. 2 nicht dargestellt; s. Fig. 5), welche an einem Messschlitten 41 der Messeinheit 4 form- und/oder kraftschlüssig angebracht ist zur Übertragung des Messhubs auf die Messeinheit 4. Die dargestellte Kopplung zwischen Adaptereinheit 3 und Schubeinheit 2 trägt zu einem einfachen Einbau und Ausbau bei.

Der Messschlitten 41 erstreckt sich über die Breite eines Befestigungsgehäuses 46 der Messeinheit 4. Er ist an dessen Seitenwänden 46.1 an nach außen abgekanteten Führungen 46.2 vertikal verschieblich gelagert. Die Führungen 46.2 umgreifend sind an den seitlichen Rändern des Messschlittens 41 beidseitig Übertragungsleisten 42 angebracht. Die Übertragungsleisten 42 sind nach Art einer Zahnstange ausgeführt, können aber auch eine sonstige Ausgestaltung aufweisen, die zur Übertragung einer Bewegung auf ein weiteres Element geeignet ist. In die Übertragungsleiste 42 greift jeweils ein als Zahnrad ausgebildetes Übertragungselement 43 ein, welches jeweils seitlich außen an dem Befestigungsgehäuse 46 angebracht ist. Das Übertragungselement 43 ist jeweils über eine Welle an einen Signalgeber 44 drehfest gekoppelt. Der Signalgeber 44 ist als ein Drehpotentiometer ausgeführt, welches mit einer Signalverarbeitungseinheit 45 auf der Rückseite des Befestigungsgehäuses 46 elektrisch verbunden ist und an dem Befestigungsgehäuse 43 (mechanisch) angebracht ist.

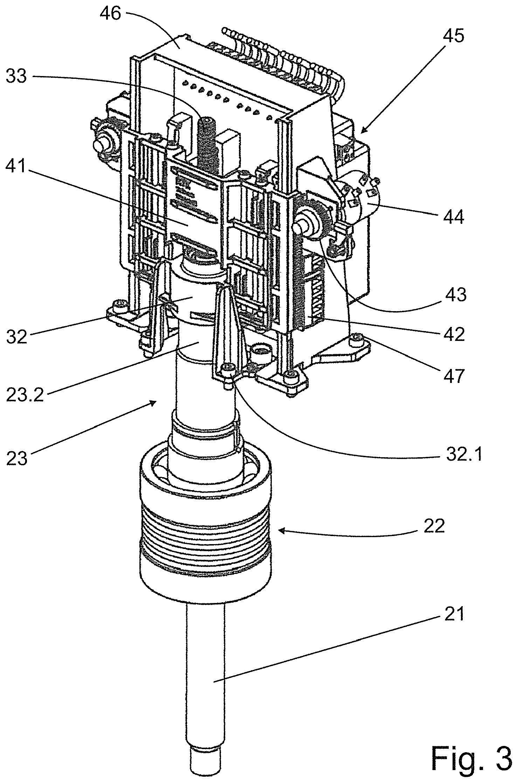

Fig. 3 zeigt die Komponenten aus Figur 2 in montiertem Zustand. Hierbei ist die Lagereinheit 32 der Adaptereinheit 3 in den unteren Bereich des Befestigungsgehäuses 46 geschoben. Sowohl das Befestigungsgehäuse 46 als auch die Lagereinheit 32 sind über Befestigungsmittel, hier Inbusschrauben 47 bzw. 32.1, in dem Gehäuse 10 des Regelventils 1 festlegbar.

Um die Schubstange 21 mit dem Ventilkegel (nicht dargestellt) um einen vorgegebenen Stellweg entlang der Stellwegrichtung zu verstellen, wird die Spindelmutter 23 über einen Antrieb und Getriebeelemente (nicht dargestellt) in Rotation versetzt. Durch die Rotation der Spindelmutter 23 wird die Schubstange 21 über das Innengewinde der Spindelmutter 23 in Zusammenwirken mit dem Gewinde der Schubstange 21 in Stellhubrichtung vertikal verstellt. Die Rotation der Spindelmutter 23 wird über das Koppelelement 31 auf die Adapterwelle 33 übertragen. Die Adapterwelle 33 weist demnach die gleiche Anzahl an Umdrehungen pro Zeit auf wie die Spindelmutter 23. Durch die Rotation der axial unbeweglich gelagerten Adapterwelle 33 verstellt sich die an dem Messschlitten 34 festgelegte Hubmutter 34 längs entlang der Adapterwelle 33 in Messhubrichtung um einen Messweg und nimmt dabei den Messschlitten 41 mit. Die Verstellhöhe, um die sich die Hubmutter 34 pro Umdrehung verstellt, ist dabei über die Steigung des Gewindes der Adapterwelle 33 festgelegt. Demnach wird der Stellweg der Schubstange 21 je nach Gewindesteigung der Adapterwelle 33 in einen bestimmten Messweg übersetzt. Das Verhältnis von Stellweg zu Messweg ist dabei festgelegt durch das Verhältnis "Gewindesteigung Spindelmutter 23 bzw. Schubstange 21 zu Gewindesteigung Adapterwelle".

Auf diese Weise lassen sich unterschiedliche Stellhübe (der gesamt mögliche Stellweg) von Regelventilen in stets einen einheitlichen Messhub (der gesamt mögliche Messweg) übersetzten, indem lediglich eine austauschbare Baueinheit, umfassend zumindest eine Adapterwelle 33 mit einer entsprechenden Gewindesteigung und einer entsprechend angepasste Hubmutter 34, angepasst wird. Denkbar wäre, dass die austauschbare Baueinheit weitere Komponenten enthält, beispielsweise das Koppelelement 31 und die Lagereinheit 32. Bei den übrigen Baugruppen, insbesondere der Messeinheit 4 und der Haube 10.1, werden vorteilhaft jedoch stets gleiche Elemente verwendet, die für die Übertragung eines bestimmten Messhubes und damit eines jeweiligen Messwegs an die Signalverarbeitungseinheit 45 ausgelegt und präzise wählbar sind. Auf diese Weise gibt die Messeinheit 4 den gewünschten Messhub vor. Dies führt zu einer einfachen Herstellung und Montage von Regelventilen 1 und einer einfachen Lagerhaltung, da relativ wenige diverse Teile auch für Regelventile mit unterschiedlichen Stellhüben vorgehalten werden müssen. Die Kosten werden gegenüber herkömmlichen Ausführungen erheblich reduziert. Die Signalverarbeitungseinheit 45 ermittelt bei Kenntnis des Verhältnisses "Stellhub zu Messhub" oder entsprechender charakteristischer Größen aus dem übertragenen Messweg den tatsächlichen Stellweg der Schubstange 21 bzw. des Ventilkegels. Bei einem aus dem Stand der Technik bekannten Regelventil 1 müssen bei unterschiedlichen Ventilhüben neben der Hubeinheit in der Regel eine Vielzahl von weiteren Komponenten getauscht werden, beispielsweise die Haube 10.1, der Messschlitten 41, das Übertragungselement 43 und das Befestigungsgehäuse 46, wobei jeweils unterschiedliche Justierungen vorgenommen werden müssen.

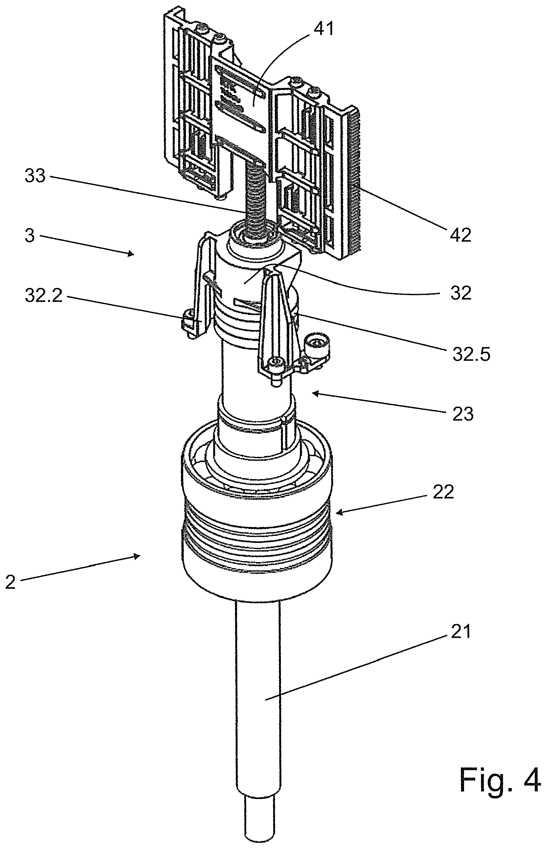

In Fig. 4 ist die Schubeinheit 2 mit der Adaptereinheit 3 und dem Messschlitten 41 der Messeinheit 4 dargestellt. Am oberen Ende der Spindelmutter 23 sind Stellringe 32.5 angeordnet. In vollständig in eine Endstellung (voll ein- bzw. aus-) gefahrenem Zustand der Schubstange kann die Spindelmutter 23 z.B. in das Tellerfederpaket 22.1 des Federlagers 22 fahren, wodurch das Eintreffen in der jeweiligen Endstellung abgefedert wird. Hierbei bewegt sich die Spindelmutter 23 relativ zu der Lagereinheit 32, wobei die Bewegungsrichtung der Stellringe 32.5 zur Erkennung der jeweiligen Endstellung detektiert werden kann.

Fig. 5 zeigt eine Explosionsdarstellung der Komponenten in Fig. 4, wobei die Hubmutter 34 erkennbar ist. Sie ist als ein vierkantiger, quaderförmiger Block ausgeführt. Denkbar sind auch andere Formen der Hubmutter, insbesondere andere Mehrkantformen (Dreikant, Sechskant etc.).

Die Fig. 6a und 6b zeigen die Adapterwelle 33 in der Lagereinheit 32 in Ansicht von hinten (Fig. 6a) und seitlich im Schnitt (6b). Hierbei ist ein Vorsprung 31.1 am unteren Ende der Adaptereinheit 3 erkennbar, welcher formschlüssig in das Koppelelement 31 oder durch dieses hindurch (nicht dargestellt) ragt. Dabei weist die Verbindung zwischen dem Vorsprung 31.1 und dem Koppelelement 31 vorzugsweise in axialer Richtung Spiel auf, um eventuelle axiale Bewegungen der Spindelmutter 23 (insbesondere beim Einfahren in den Federweg des Federpakets) kompensieren zu können. Fig. 6b zeigt die Anordnung eines Lagers 32.7, über welches die Adapterwelle 33 rotierbar vertikal bzw. axial unverschiebbar festgelegt ist. Bevorzugt ist das Lager 32.7 als Kugellager ausgeführt, es kann aber auch in einer anderen Ausführung ausgestaltet sein. Zudem ist in Fig. 6b eine Schräge 32.4 auf der Rückseite der Lagereinheit 32 ersichtlich, die eine optimierte Anordnung der Lagereinheit 32 in dem Befestigungsgehäuse 46 erlaubt.

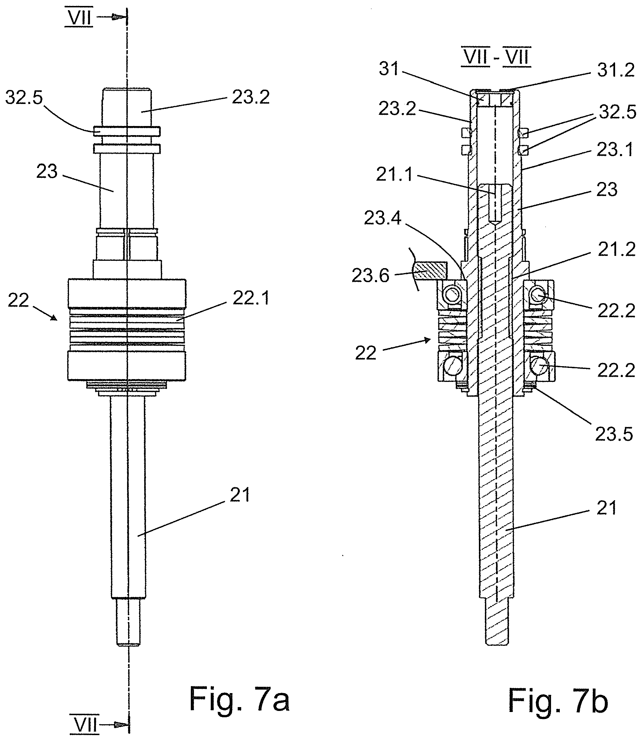

Details der Schubeinheit 2 sind in Fig. 7a in einer Ansicht von der Seite und in Fig. 7b in einem Schnitt ersichtlich. An der Spindelmutter 23 sind eine erste und eine zweite Auflage 23.4 und 23.5 erkennbar, über welche das Federlager 22 auf die Spindelmutter 23 wirkt. Fährt beispielsweise bei vollständigem Schließen des Regelventils der Ventilkegel auf den Ventilsitz auf, rotiert die Spindelmutter 23 in der Regel kurzzeitig weiter und wird dabei durch die Schubstange 21 nach oben gedrückt. Dabei nimmt die Spindelmutter 23 das Federlager 22 über die zweite Auflage 23.5 mit. Auf der oberen Seite des Federlagers 22 befindet sich ein vertikal bzw. axial ortsfest angebrachtes Widerlager 23.6, welches beispielsweise an dem bzw. relativ zu dem Gehäuse 10 befestigt ist. Gegen dieses wird das Federlager 22 geschoben und stützt sich an diesem ab, sodass das darin enthaltene Tellerfederpaket 22.1 zwischen der zweiten Auflage 23.5 und dem Widerlager 23.6 zusammengedrückt wird und die Bewegung abfedert bzw. abdämpft. Ein solcher Abdämpf-Mechanismus kann vorteilhaft auch für die Bewegung in den vollständig geöffneten Zustand vorgesehen sein, wobei beispielsweise die erste Auflage 23.4 und ein zweites Widerlager (nicht dargestellt) mit dem Federlager zusammenwirken. In dem Federlager 22 sind die beiden Kugellager 22.2 zur rotierbaren Lagerung der Spindelmutter 23 sichtbar. Fig. 7b zeigt das Gewinde der Schubstange 21. Zudem ist eine Vertiefung 21.1 an der oberen Stirnseite der Schubstange 21 erkennbar, welche das Koppelende 33.1 der Adapterwelle 33 aufnehmen kann.

In den beschriebenen Ausführungsbeispielen ist die Adaptereinheit 3 mit einem als Adapterwelle 33 ausgestalteten Übertragungsglied versehen. Die Übersetzung des Stellhubes in den Messhub erfolgt bei konstant übertragener Drehzahl über die Gewindesteigung der Adapterwelle. Denkbar sind auch andere Ausgestaltungsvarianten, in welchen beispielsweise eine getriebeartige Anordnung mit einem oder mehreren Zahnrädern und/oder Zahnstangen und/oder -riemen in der Adaptereinheit zum Einsatz kommt. Diese könnten beispielsweise einen unterschiedlichen Messhub auch durch Variation der Drehzahl erreichen. Die Zuordnung der Elemente, wie sie zu der Adaptereinheit 3 oder der Messeinheit 4 erfolgt sind, kann je nach ihrer Aufgabe variieren.

Über den erfindungsgemäßen Einsatz einer Adaptereinheit 3 zwischen der Schubeinheit 2 und der Messeinheit 4 lässt sich somit insbesondere bei Ventilbaureihen mit unterschiedlichen Stellhüben durch die Übersetzung auf einen einheitlichen Messhub auf einfache Weise der Teile- und Fertigungsauswand erheblich verringern, was mit einer beträchtlichen Kostenreduktion verbunden ist.

## Patentansprüche

1. Regelventil (1) mit einem Ventilgehäuse (13), durch das ein Strömungskanal (14) verläuft, dessen Strömungsquerschnitt mittels einer Verschlusseinheit aus Ventilsitz und einem relativ zu diesem verstellbaren Ventilkegel über einen vorgegebenen Stellhub änderbar ist, und mit einer Stelleinrichtung, welche eine Schubeinheit (2) mit einer den Ventilkegel über einen Verstellweg verstellenden Schubstange (21) und eine auf diese einwirkende und mittels einer Regeleinrichtung des Regelventils (1) geregelte Antriebseinrichtung aufweist, wobei die Regeleinrichtung eine den Verstellweg über eine Übertragungseinheit erfassende Messeinheit (4) aufweist, wobei die Übertragungseinheit zwischen der Schubeinheit (2) und der Messeinheit (4) mit einer eine austauschbare Baueinheit aufweisenden Adaptereinheit (3) versehen ist, welche den Stellhub entsprechend einem von ihr vorgegebenen Übersetzungsverhältnis in einen durch die Messeinheit (4) vorgegebenen Messhub übersetzt,
wobei die Messeinheit (4) ein verschieblich gelagertes Hubelement aufweist und die Baueinheit ein Übersetzungsglied umfasst, welches an das Hubelement angekoppelt ist,
wobei das Hubelement einen zu dem Verstellweg entsprechend dem Übersetzungsverhältnis proportionalen Messweg zurücklegt, **dadurch gekennzeichnet dass** das Hubelement den Messweg mittels mindestens einer an dem Hubelement angeordneten Übertragungsleiste (42) auf ein Übertragungselement (43) überträgt, welches in Wirkverbindung mit einem Positionssignale liefernden Signalgeber (44) steht und
wobei die Messeinheit (4) zum Bestimmen des Stellhubs aus Positionssignalen des Signalgebers (44) ausgebildet ist.

2. Regelventil (1) nach Anspruch 1,
**dadurch gekennzeichnet,**
**dass** die Baueinheit ein Hubglied umfasst, über welches das Übersetzungsglied an dem Hubelement angekoppelt ist.

3. Regelventil (1) nach Anspruch 2,
**dadurch gekennzeichnet,**
**dass** das Übersetzungsglied eine axial unverschieblich drehbar gelagerte Adapterwelle (33) ist, die über ein auf dieser beim Drehen axial bewegtes Hubglied an das Hubelement angekoppelt ist und dass das Hubglied eine Hubmutter (34) ist.

4. Regelventil (1) nach Anspruch 2 oder 3
**dadurch gekennzeichnet,**
**dass** das Hubglied an dem Hubelement kraftschlüssig festgelegt ist.

5. Regelventil (1) nach einem der vorhergehenden Ansprüche,
**dadurch gekennzeichnet,**
**dass** das Hubelement als verschieblich gelagerter Messschlitten (41) ausgebildet ist.

6. Regelventil (1) nach einem der vorhergehenden Ansprüche,
**dadurch gekennzeichnet,**
**dass** die Adaptereinheit (3) zum Ankoppeln an der Schubeinheit (2) ein Koppelelement (31) und zur Verbindung mit einem Gehäuse (10) des Regelventils (1) eine Lagereinheit (32) aufweist und dass die Schubeinheit (2) mit einem zu dem Koppelelement (31) komplementären Koppelanschluss versehen ist.

7. Regelventil (1) nach Anspruch 6,
**dadurch gekennzeichnet,**
**dass** das Koppelelement (31) Teil der austauschbaren Baueinheit ist und dass die Lagereinheit (32) mit der Baueinheit austauschbar oder dauerhaft mit dem Ventilgehäuse (13) verbunden ist.

8. Regelventil (1) nach einem der vorhergehenden Ansprüche,
**dadurch gekennzeichnet,**
**dass** der Stellhub zwischen 1 und 100 mm beträgt und
**dass** der Messhub zwischen 1 und 80 mm beträgt, wobei der Messhub kleiner oder gleich dem Stellhub ist.

9. Regelventil (1) nach einem der Ansprüche 6 bis 8,
**dadurch gekennzeichnet,**
**dass** das Übersetzungsglied (33) mit seinem dem Ventilsitz zugewandten Ende in die ortsfest mit dem Gehäuse (10) verbundene Lagereinheit (32) ragt und in Messhubrichtung unbeweglich in der Lagereinheit (32) festgelegt ist.

10. Regelventil (1) nach Anspruch 9,
**dadurch gekennzeichnet,**
**dass** das Übersetzungsglied (33) in der Lagereinheit (32) um die Messhubachse rotierbar gelagert ist.

11. Regelventil (1) einem der vorhergehenden Ansprüche,
**dadurch gekennzeichnet,**
**dass** die Schubeinheit (2) eine Spindelmutter (23) aufweist, welche sich längs konzentrisch zur Stellhubachse erstreckt und je nach Antriebsrichtung um die Stellhubachse in Rotation versetzbar ist und
**dass** die Schubstange (21) eine in der Spindelmutter (23) geführte Gewindestange ist, wobei sie derart gelagert ist, dass sie bei Rotation der Spindelmutter (23) in Stellhubrichtung verstellt wird.

12. Regelventil (1) nach Anspruch 11,
**dadurch gekennzeichnet,**
**dass** die Spindelmutter (23) mit ihrem dem Ventilsitz abgewandten Ende auf der gegenüberliegenden Seite des Übersetzungsglieds (33) in die Lagereinheit (32) ragt,
**dass** das Koppelelement (31) zwischen Spindelmutter (23) und Übersetzungsglied in der Lagereinheit (32) angeordnet ist und
**dass** die Kopplung in der Weise ausgebildet ist, dass die Rotation der Spindelmutter (23) über das Koppelelement (31) auf das Übersetzungsglied übertragen wird.

13. Regelventil (1) nach Anspruch 12,
**dadurch gekennzeichnet,**
**dass** die Rotation des Übersetzungsglieds das Hubelement mittels dem an dem Hubelement kraftschlüssig festgelegten Hubglied in Messhubrichtung verstellt.

14. Regelventil (1) nach einem der Ansprüche 10 bis 13,
**dadurch gekennzeichnet,**
**dass** die Spindelmutter (23) auf ihrer dem Ventilsitz zugewandten Seite durch ein Federlager (22) federnd bezüglich des Ventilsitzes abgestützt ist und/oder dass die Spindelmutter (23) in der Lagereinheit (32) federnd abgestützt ist.

15. Regelventil (1) nach Anspruch 14,
**dadurch gekennzeichnet,**
**dass** in vollständig ausgefahrenem Zustand der Schubstange (21) die Spindelmutter (23) in den Federweg des Federlagers (22) fahrbar ist.

16. Regelventil (1) nach einem der Ansprüche 11 bis 15,
**dadurch gekennzeichnet,**
**dass** in vollständig eingefahrenem Zustand der Schubstange (21) die Spindelmutter (23) in den Federweg der Spindelmutter (23) oder in der Lagereinheit (32) fahrbar ist.

17. Regelventil (1) nach einem der Ansprüche 14 bis 16,
**dadurch gekennzeichnet,**
**dass** das Federlager (22) Tellerfedern zur federnden Abstützung der Spindelmutter (23) aufweist.

## Claims

1. A control valve (1), comprising a valve housing (13) through which a flow channel (14) extends, the flow cross section of which can be changed by a prespecified adjustment stroke by means of a closure unit comprising a valve seat and a valve cone which can be adjusted relative to said valve seat, and comprising an adjusting device which has a sliding unit (2) with a sliding rod (21) which adjusts the valve cone over an adjustment path and a drive device which acts on the sliding rod and is controlled by means of a controller of the control valve (1),
wherein the controller has a measuring unit (4) which detects the adjustment path via a transmission unit,
wherein the transmission unit is equipped with an adapter unit (3) comprising an exchangeable structural unit between the sliding unit (2) and the measuring unit (4), which adapter unit converts the adjustment stroke into a measurement stroke prespecified by the measuring unit (4) in a manner corresponding to a transmission ratio prespecified by the adapter unit,
wherein the measuring unit (4) has a moveably mounted lifting element, and the structural unit has a transmission element which is coupled to the lifting element,
wherein the lifting element travels a measurement path which, corresponding to the transmission ratio, is proportional to the adjustment path,
**characterized in that**
the lifting element transmits the measurement path to a transmission element (43), which has a functional connection to a signal transmitter (44) which outputs a position signal, by means of at least one transmission rail (42) arranged on the lifting element, and
wherein the measuring unit (4) is designed to determine the adjustment stroke from position signals of the signal transmitter (44).

2. The control valve (1) according to claim 1,
**characterized in that**
the structural unit comprises a lifting member via which the transmission element is coupled to the lifting element.

3. The control valve (1) according to claim 2,
**characterized in that**
the transmission element is an axially immovably rotatably mounted adapter shaft (33) which is coupled to the lifting element via a lifting member which is moved axially on said adapter shaft when the same turns, and **in that** the lifting member is a lifting nut (34).

4. The control valve (1) according to claim 2 or 3,
**characterized in that**
the lifting member is friction-locked to the lifting element.

5. The control valve (1) according to any one of the preceding claims,
**characterized in that**
the lifting element is designed as a moveably mounted measuring carriage (41).

6. The control valve (1) according to any one of the preceding claims,
**characterized in that**
the adapter unit (3) has a coupling element (31) for coupling to the sliding unit (2) and has a bearing unit (32) for connection to a housing (10) of the control valve (1), and **in that** the sliding unit (2) is equipped with a coupling connection which is complementary to the coupling element (31).

7. The control valve (1) according to claim 6,
**characterized in that**
the coupling element (31) is part of the exchangeable structural unit, and **in that** the bearing unit (32) is connected exchangeably to the structural unit or permanently to the valve housing (13).

8. The control valve (1) according to any one of the preceding claims,
**characterized in that**
the adjustment stroke is between 1 and 100 mm, and
**in that** the measurement stroke is between 1 and 80 mm, wherein the measurement stroke is less than or equal to the adjustment stroke.

9. The control valve (1) according to any one of claims 6 to 8,
**characterized in that**
the end of the transmission element (33) which faces the valve seat protrudes into the bearing unit (32) rigidly connected to the housing (10), and is fixed in the bearing unit (32) so as to be immovable in the measurement stroke direction.

10. The control valve (1) according to claim 9,
**characterized in that**
the transmission element (33) is mounted in the bearing unit (32) to allow rotation about the measurement stroke axis.

11. The control valve (1) according to any one of the preceding claims,
**characterized in that**
the sliding unit (2) comprises a spindle nut (23) which extends longitudinally concentrically to the adjustment stroke axis and can be set in rotation about the adjustment stroke axis according to the drive direction, and
**in that** the sliding rod (21) is a threaded rod guided in the spindle nut (23), wherein it is mounted in such a manner that it is adjusted in the adjustment stroke direction when the spindle nut (23) is rotated.

12. The control valve (1) according to claim 11,
**characterized in that**
the end of the spindle nut (23) which faces away from the valve seat protrudes on the opposite side of the transmission element (33) into the bearing unit (32), **in that** the coupling element (31) is arranged between the spindle nut (23) and transmission element in the bearing unit (32), and
**in that** the coupling is designed in such a manner that the rotation of the spindle nut (23) is transferred via the coupling element (31) to the transmission element.

13. The control valve (1) according to claim 12,
**characterized in that** the rotation of the transmission element adjusts the lifting element in the measurement stroke direction by means of the lifting member which is friction-locked to the lifting element.

14. The control valve (1) according to any one of claims 10 to 13,
**characterized in that**
the spindle nut (23) is resiliently supported, relative to the valve seat, by a spring seat (22) on the side which faces the valve seat, and/or **in that** the spindle nut (23) is resiliently supported in the bearing unit (32).

15. The control valve (1) according to claim 14,
**characterized in that**
in the completely extended state of the sliding rod (21), the spindle nut (23) can be moved into the spring path of the spring seat (22).

16. The control valve (1) according to any one of claims 11 to 15,
**characterized in that**
in the completely retracted state of the sliding rod (21), the spindle nut (23) can be moved into the spring path of the spindle nut (23) or in the bearing unit (32).

17. The control valve (1) according to any one of claims 14 to 16,
**characterized in that**
the spring seat (22) comprises disk springs for resiliently supporting the spindle nut (23).

## Revendications

1. Soupape de régulation (1) comportant un boîtier de soupape (13) à travers lequel passe un canal d'écoulement (14) dont la section transversale d'écoulement est modifiable au moyen d'une unité de fermeture composée d'un siège de soupape et d'un cône de soupape réglable par rapport à celui-ci par une course de réglage prédéfinie, et un dispositif de réglage qui présente une unité de poussée (2) dotée d'une barre de poussée (21) réglant le cône de soupape sur une course de réglage et une unité d'entraînement régulée au moyen du dispositif de régulation de la soupape de régulation (1), le dispositif de régulation présentant une unité de mesure (4) enregistrant la course de réglage par l'intermédiaire d'une unité de transmission,
l'unité de transmission étant pourvue, entre l'unité de poussée (2) et l'unité de mesure (4), d'une unité d'adaptation (3) présentant une unité de construction échangeable et qui transforme la course de réglage, en fonction d'un rapport de démultiplication qui lui est prédéfini, en une course de mesure prédéfinie par l'unité de mesure (4),
l'unité de mesure (4) présentant un élément de levage à palier mobile et l'unité de construction comprenant un organe de démultiplication qui est couplé à l'élément de levage,
l'élément de levage parcourant une course de mesure proportionnelle à la course de réglage en fonction du rapport de démultiplication,
**caractérisée en ce que** l'élément de levage transmet la course de mesure au moyen d'au moins une tige de transmission (42) disposée au niveau de l'élément de levage à un élément de transmission (43) qui est en interaction avec un émetteur de signaux (44) délivrant des signaux de position et
l'unité de mesure (4) étant conçue pour définir la course de réglage à partir des signaux de position de l'émetteur de signaux (44).

2. Soupape de régulation (1) selon la revendication 1,
**caractérisée en ce que**
l'unité de construction comprend un organe de levage par lequel l'élément de démultiplication est couplé à l'élément de levage.

3. Soupape de régulation (1) selon la revendication 2,
**caractérisée en ce que** l'élément de démultiplication est un arbre adaptateur (33) à palier rotatif qui est couplé par un élément de levage déplacé axialement sur celui-ci en cas de rotation à l'élément de levage et que l'organe de levage est un écrou de levage (34).

4. Soupape de régulation (1) selon la revendication 2 ou 3,
**caractérisée en ce que**
l'organe de levage est fixé à l'élément de levage par correspondance géométrique.

5. Soupape de régulation (1) selon une des revendications précédentes,
**caractérisée en ce que**
l'élément de levage se présente sous forme d'un chariot de mesure (41) à palier mobile.

6. Soupape de régulation (1) selon une des revendications précédentes,
**caractérisée en ce que**
l'unité d'adaptation (3) présente, pour un couplage à l'unité de poussée (2), un élément de couplage (31) et, pour une connexion à un boîtier (10) de la soupape de régulation (1), une unité de palier (32) et que l'unité de poussée (2) est pourvue d'un raccord de couplage complémentaire à l'élément de couplage (31).

7. Soupape de régulation (1) selon la revendication 6,
**caractérisée en ce que**
l'élément de couplage (31) fait partie de l'unité de construction échangeable et que l'unité de palier (32) est échangeable avec l'unité de construction ou connectée de manière permanente au boîtier de soupape (13).

8. Soupape de régulation (1) selon une des revendications précédentes,
**caractérisée en ce que**
la course de réglage va de 1 à 100 mm et
que la course de mesure va de 1 à 80 mm, la course de mesure étant inférieure ou égale à la course de réglage.

9. Soupape de régulation (1) selon une des revendications 6 à 8,
**caractérisée en ce que**
l'organe de démultiplication (33) dépasse par son extrémité tournée vers le siège de soupape dans l'unité de palier (32) connectée à emplacement fixe au boîtier (10) et est fixé dans le sens de la course de mesure de manière inamovible dans l'unité de palier (32).

10. Soupape de régulation (1) selon la revendication 9,
**caractérisée en ce que**
l'organe de démultiplication (33) s'appuie en rotation autour de l'axe de la course de mesure dans l'unité de palier (32).

11. Soupape de régulation (1) selon une des revendications précédentes,
**caractérisée en ce que**
l'unité de poussée (2) présente un écrou à broche (23) qui s'étend longitudinalement concentriquement par rapport à l'axe de la course de réglage et peut être mis en rotation en fonction du sens d'entraînement autour de l'axe de la course de réglage et
que la barre de poussée (21) est une barre filetée guidée dans l'écrou à broche (23), sachant qu'elle s'appuie de manière à être réglée lors de la rotation de l'écrou à broche (23) dans le sens de la course de réglage.

12. Soupape de régulation (1) selon la revendication 11,
**caractérisée en ce que**
l'écrou à broche (23) dépasse par son extrémité tournée vers le siège de soupape, sur le côté opposé de l'organe de démultiplication (33), dans l'unité de palier (32),
que l'élément de couplage (31) est disposé entre l'écrou à broche (23) et l'organe de démultiplication dans l'unité de palier (32) et
que le couplage est réalisé de manière à ce que la rotation de l'écrou à broche (23) soit transmise par l'élément de couplage (31) à l'organe de démultiplication.

13. Soupape de régulation (1) selon la revendication 12,
**caractérisée en ce que**
la rotation de l'organe de démultiplication déplace l'élément de levage au moyen de l'organe de levage fixé par correspondance géométrique à l'élément de levage dans le sens de la course de mesure.

14. Soupape de régulation (1) selon une des revendications 10 à 13,
**caractérisée en ce que**
l'écrou à broche (23) est soutenu, sur sa face tournée vers le siège de soupape, par un palier à ressort (22), élastiquement par rapport au siège de soupape et/ou que l'écrou à broche (23) est soutenu élastiquement dans l'unité de palier (32).

15. Soupape de régulation (1) selon la revendication 14,
**caractérisée en ce que**,
en état entièrement sorti de la barre de poussée (21), l'écrou à broche (23) peut circuler dans la course de ressort du palier à ressort (22).

16. Soupape de régulation (1) selon une des revendications 11 à 15,
**caractérisée en ce que**,
en état entièrement rentré de la barre de poussée (21), l'écrou à broche (23) peut circuler dans la course de ressort du palier à ressort (23) ou dans l'unité de palier (32).

17. Soupape de régulation (1) selon une des revendications 14 à 16,
**caractérisée en ce que**
le palier à ressort (22) présente des rondelles-ressorts pour soutenir élastiquement l'écrou à broche (23).
